(19) 

Europäisches
Patentamt
European
Patent Office
Office européen
des brevets

(11) **EP 4 305 596 B1**

(12) **EUROPEAN PATENT SPECIFICATION**

(45) Date of publication and mention
of the grant of the patent:
**23.04.2025 Bulletin 2025/17**

(21) Application number: **22713876.5**

(22) Date of filing: **07.03.2022**

(51) International Patent Classification (IPC):
*G06T 7/254* (2017.01)    *G06T 7/246* (2017.01)

(52) Cooperative Patent Classification (CPC):
**G06T 7/254; G06T 7/246;** G06T 2207/10016;
G06T 2207/20224; G06T 2207/30261

(86) International application number:
**PCT/EP2022/055749**

(87) International publication number:
**WO 2022/189355 (15.09.2022 Gazette 2022/37)**

(54) **PROVISION OF MEASURE INDICATIVE OF IMPACT TIME BETWEEN IMAGE SENSOR AND OBJECT**

BEREITSTELLUNG EINES MASSES ZUR ANZEIGE DER AUFPRALLZEIT ZWISCHEN
BILDSENSOR UND OBJEKT

FOURNITURE D'UNE MESURE INDIQUANT LE TEMPS D'IMPACT ENTRE UN CAPTEUR D'IMAGE
ET UN OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2021 SE 2150289**

(43) Date of publication of application:
**17.01.2024 Bulletin 2024/03**

(73) Proprietors:
• **Åström, Anders**
**584 37 Linköping (SE)**
• **Forchheimer, Robert**
**584 22 Linköping (SE)**

(72) Inventors:
• **Åström, Anders**
**584 37 Linköping (SE)**
• **Forchheimer, Robert**
**584 22 Linköping (SE)**

(74) Representative: **Bergenstråhle & Partners AB**
**P.O. Box 17704**
**118 93 Stockholm (SE)**

(56) References cited:
WO-A1-2013/107525    US-A1- 2003 026 455
US-A1- 2008 046 181

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

EP 4 305 596 B1

## Description

TECHNICAL FIELD

Embodiments herein concern provision of a measure indicative of impact time between an image sensor and an object relatively moving at least partially towards, or away from, the image sensor.

BACKGROUND

There are numerous applications for Time-to-Impact (TTI) estimation from a sequence of images generated by a video camera. The applications range from vehicle collision warning sensors to robotics and safety systems in industry. TTI estimation is a special case of general motion estimation. The aim is to estimate when a possible collision may occur between the camera and an object seen by camera.

The image processing needed to perform real-time TTI estimation requires a fair amount of hardware resources. Spatial motion within the image is typically based on estimating the optical flow. To do this in real time and conventionally requires fast computing hardware and data storage that can hold one or more frames. The camera itself needs to produce low-noise images of good quality. In particular, if used in outdoor applications, the dynamic range of the camera needs to be high.

In WO 2013107525 A1 it was presented a novel method for computing impact time based on image sensing that in contrast to prior art methods at the time required both fewer and less complex hardware resources and could be implemented more energy and cost efficient. The method may be described as based on estimating the "inverse" of the motion or how long an image feature stays at the same pixel position. The features were measured by identification of local extreme points (LEPs) and then compute the duration, i.e. stay, of these in pixel positions they were identified in. Based on this it was then shown how TTI could be estimated. This approach drastically reduces the computational load and also lends itself naturally to be implemented using a smart sensor architecture denoted Near Sensor Image Processing (NSIP), see e.g. Forchheimer R, Aström A, "Near-Sensor Image Processing. A New paradigm." IEEE Trans Image Processing, 3, 6, 735-746 (1994).

SUMMARY

In view of the above an object is to provide one or more improvements or alternatives to the prior art.

According to a first aspect of embodiments herein, the object is achieved by a method for providing a measure indicative of impact time between an image sensor and an object relatively moving at least partially towards, or away from, the image sensor. The method comprises to obtain image data comprising a first set of pixel data for pixel positions of the image sensor and a second set of pixel data for said pixel positions. The pixel data at each of said pixel positions in the first set relate to sensed pixel data by the image sensor for that pixel position when imaging said object a first time. Pixel data at each of said pixel positions in the second set relate to pixel data sensed by the image sensor for that pixel position when subsequently imaging said object a later second time. It is identified local extreme points, "LEPs" in the first set of pixel data and identified new LEPs in the second set of pixel data, which new LEPs are LEPs in pixel positions without identified LEPs in the first set of pixel data. It is computed a first value proportional to the total number of said identified new LEPs in the second set of pixel data. Said measure indicative of impact time is then provided based on at least said first value.

According to a second aspect of embodiments herein, the object is achieved by one or more apparatuses for providing a measure indicative of impact time between an image sensor and an object relatively moving at least partially towards, or away from, the image sensor. The apparatus(s) is configured to obtain image data comprising a first set of pixel data for pixel positions of the image sensor and a second set of pixel data for said pixel positions. The pixel data at each of said pixel positions in the first set relate to sensed pixel data by the image sensor for that pixel position when imaging said object a first time. Pixel data at each of said pixel positions in the second set relate to pixel data sensed by the image sensor for that position when subsequently imaging said object a later second time. The apparatus(s) is further configured to identify LEPs in the first set of pixel data and identify new LEPs in the second set of pixel data, which new LEPs are LEPs in pixel positions without identified LEPs in the first set of pixel data. Further, the apparatus(s), is configured to compute a first value proportional to the total number of said identified new LEPs in the second set of pixel data. Moreover, said apparatus(s) is configured to provide said measure indicative of impact time, wherein the measure is based on at least said first value.

According to a third aspect of embodiments herein, the object is achieved by one or more computer programs. The computer program(s) comprises instructions that when executed by one or more apparatuses causes these to perform the method according to the first aspect. Additionally or alternatively, the computer program(s) comprises instructions that when executed by a hardware synthesizing device causes hardware to be synthesized and/or be configured as said one or more apparatuses according to the second aspect.

According to a fourth aspect of embodiments herein, the object is achieved by carrier(s) comprising the computer program(s) according to the third aspect.

Compared to e.g. said prior art method based on LEPs for providing an estimate or indication, such as disclosed in said WO 2013107525 A1, based on longevity or stability of LEP runs in pixel positions, embodiments herein offer improved noise resistance since there are no LEP runs that can be destroyed by noise. Embodiments herein also enables faster provision of a useful measure, such as a TTI estimate, since it e.g. may be based on only two image frames, while said prior art method needs a longer sequence of image frames to capture LEP runs before a useful measure can be provided.

Further, embodiments herein enable resource efficient and low complex hardware implementation, e.g. by near image sensor processing, i.e. with processing hardware closely operating with or integrated with the image sensor.

BRIEF DESCRIPTION OF THE DRAWINGS

Examples of embodiments herein are described in more detail with reference to the appended schematic drawings, which are briefly described in the following.

Figure 1 shows result when plotting the LEPs for each image in a simulation of an object moving towards an image sensor.
Figure 2 shows computed sums f(i) and f'(i) for all 150 image frames in the simulation.
Figure 3 shows for each image frame in the simulation, computed value k*N, corresponding true value and average of 15 frames with the same step length for the computed values.
Figure 4 is based on a low pass filtering of the same image as in Figure 1 and thereby with less LEPs.
Figure 5 shows a corresponding f(i) and f'(i) diagram as in Figure 2 but based on the LEP images of Figure 4.
Figure 6 shows a corresponding view as in Figure 3 but for the reduced number of LEPs case as in Figures 4-5.
Figures 7a-b are examples with different positions of Focus of Expansion (FOE).
Figure 8 shows a LEP image with LEPs f(x,y) generated from a 2D image.
Figure 9 shows a LEP image with new LEPs f'(x,y) based on two LEP images formed from two consecutive "zoomed" versions of said 2D image from the same sequence as the LEP image in Figure 8.
Figure 10 shows the result when LEPs in f(x,y) and new LEPs in f'(x,y) are summed as a function of sequence of image frames.
Figure 11 shows result from dividing f(x,y) and f'(x,y) from Figure 10 with each other and application of constant scale factor.
Figure 12 schematically illustrates a situation with an image sensor and object relatively moving towards the image sensor.
Figures 13A-B are schematic and simplified drawings to exemplify the principle of new LEPs.
Figure 14 is a flowchart schematically illustrating a method and actions according to embodiments herein.
Figure 15 is a schematic block diagram for illustrating embodiments of how one or more apparatuses may be configured to perform the method and actions discussed in connection with Figure 14.
Figures 16-17 are a schematic drawings illustrating some embodiments relating to computer programs and carriers thereof.

DETAILED DESCRIPTION

Embodiments herein are exemplary embodiments. It should be noted that these embodiments are not necessarily mutually exclusive. Components or parts from one embodiment may be tacitly assumed to be present in another embodiment and it will be obvious to a person skilled in the art how those components or parts may be used in the other exemplary embodiments.

As a development towards embodiments herein, the situation and problem indicated in the Background will first be further elaborated upon.

It has turned out that the measures of LEP runs that the prior art method disclosed in said WO 2013107525 A1 is based on, i.e. the measure identifying how long LEPs stay in the same pixel position, in many practical applications are more noise sensitive than desirable.

The inventors have developed a new method, disclosed herein, which, similar to said prior art method, lends itself to a low-complex hardware implementation. However, the new method is more stable in the presence of noise, particularly in a 2D case i.e. with 2D images or more general with an image sensor capturing 2D image data. Another advantage is that the new method requires fewer exposures resulting in image data until a useful measure can be provided, thus e.g. enabling faster data that a decision can be based on.

Said prior art method utilizes two main principles, namely (a) that motion vectors are computed at specific feature points that correspond to said LEPs, and (b) that time, rather than displacement, is measured. Based on how long time a LEP stays within one pixel position optical flow data is obtained based on the inverse of this time interval. The new method disclosed herein is based on the same main principles, i.e. to use the stability in image data to compute TTI. However, while the previous method required a large number of images before a result but with the new method, which can be considered to be based on statistics, a useful result can be provided already from two consecutive images.

Derived relations from example

Relations underlying the new method and embodiments herein are below mathematically derived and explained based on a simplified example. The explanation and example are based on some assumptions to facilitate understanding and simplify the mathematics. However, as the skilled person realizes, this does not mean that the embodiments herein are restricted to the specific example or the assumptions. The example and assumption are rather a way of providing understanding on how information regarding TTI can be comprised in the data that embodiments here are utilizing to provide measure(s) indicative of TTI.

*Table 1*

| 1 | 2 | 3 | 4 | 5 | Distance from FOE, e.g. center of image,, i.e. corresponding to the position. |
|---|---|---|---|---|---|
| $\dfrac{1}{5}$ | $\dfrac{2}{5}$ | $\dfrac{3}{5}$ | $\dfrac{4}{5}$ | $\dfrac{5}{5}$ | LEP displacement per frame, ki |
| $\dfrac{5}{1}$ | $\dfrac{5}{2}$ | $\dfrac{5}{3}$ | $\dfrac{5}{4}$ | $\dfrac{5}{5}$ | Average run-length of a stationary LEP $$\widehat{RL} = \frac{1}{k\,i}$$ |
| $\dfrac{1}{10}$ | $\dfrac{2}{10}$ | $\dfrac{3}{10}$ | $\dfrac{4}{10}$ | $\dfrac{5}{10}$ | $$\frac{k\,i}{2}$$ Average number of new LEP per frame f'(i), given a large number of frames, |

Table 1 has five columns, representing distances from Focus Of Expansion (FOE), e.g. from center of an image captured by an 1D image sensor. It is assumed that the image sensor is imaging or have imaged an object with a flat surface facing the image sensor and perpendicular to the optical axis, and which object is relatively moving towards the image sensor from the FOE, i.e. so that there will be an impact between the object and the sensor if the movement would continue for a sufficient time. The image sensor is capturing a sequence of image frames of the object. The distances are in the example 1-5 from the FOE, respectively.

Row 1 indicates the distances from FOE. That is, distance 5 is 5 times farther away from the FOE than distance 1. Each distance 1-5 may correspond to a pixel position from e.g. a pixel corresponding to FOE. It may be assumed that each image contains as many LEPs as possible, i.e. a maximum detailed image, which e.g. may correspond to that half of the pixels are LEPs since a LEP in a 1D case requires two closest neighboring pixels that are not LEPs.

It is in the example further assumed that the so called k-value is 1/5. The k value corresponds to the speed that the object and the image sensor are moving with towards each other. A LEP, or in general a feature of the object, at a distance farther away from the FOE will move faster than one closer to the FOE, and displacement per frame will reflect this. The displacement, D, at a certain distance, d, from the FOE can generally be computed as:

$$D = k*d \qquad\qquad\qquad\qquad \text{(Equation 1)}$$

Row 2 indicates the LEP displacement per frame for a LEP in respective position 1-5, i.e. at respective distance from FOE represented by the position. The displacement here corresponds to k*i, where i indicates the position or distance from FOE, i.e. here 1-.5

Row 3 indicates the average run-length of a stationary LEP in respective position, i.e. at respective distance from the FOE. As realized the average run length is $\widehat{RL} = \dfrac{1}{k\,i}$. In others words, the average run length indicates how long a LEP in average should stay in each position, in number of image frames.

Row 4 indicates an average of new LEPs per frame, denoted f'(i) herein, given a large number of frames. For a number L of consecutive image frames, the average value of f'(i) becomes:

$$\frac{1}{L}\sum_L f'(i) \approx \frac{ki}{2} \qquad\qquad \text{(Equation 1)}$$

Further, with a maximum number of LEPs as assumed for the example as explained above, the total number of LEPs for said L image frames becomes:

$$\sum_L f(i) \approx \frac{L}{2} \qquad\qquad \text{(Equation 2)}$$

Solving out L from Equation 3 and use it with Equation 2, gives:

$$\frac{1}{2\sum_L f(i)}\sum_L f'(i) \approx \frac{ki}{2} \qquad\qquad \text{(Equation 3)}$$

This can be rewritten as:

$$\sum_L f'(i) \approx ki\sum_L f(i) \qquad\qquad \text{(Equation 5)}$$

And can further be simplified to:

$$\sum_L f'(i) \approx k\sum_L if(i) \qquad\qquad \text{(Equation 4)}$$

Summarizing over all positions i gives:

$$\sum_i \sum_L f'(i) \approx k\sum_i \sum_L if(i) \qquad\qquad \text{(Equation 5)}$$

Changing the order of summation results in:

$$\sum_L \sum_i f'(i) \approx k\sum_L \sum_i if(i) \qquad\qquad \text{(Equation 6)}$$

With f(i) having a random distribution along the image it can be approximated:

$$\sum_i if(i) \approx \frac{\sum_i f(i)}{N}\sum_i i \qquad\qquad \text{(Equation 7)}$$

, where N is the total of pixel positions i involved, in the example N would thus be 5. This gives:

$$\sum_L \sum_i f'(i) \approx k\sum_L \left(\frac{\sum_i f(i)}{N}\sum_i i\right) \qquad\qquad \text{(Equation 8)}$$

By letting L=1, this becomes:

$$\sum_i f'(i) \approx k\frac{\sum_i f(i)}{N}\sum_i i \qquad\qquad \text{(Equation 9)}$$

By rearranging this equation a statistical value of k can be obtained:

$$\mathbf{k} \approx \frac{N\sum_i f'(i)}{\sum_i i * \sum_i f(i)} = \mathbf{constant} * \frac{\sum_i f'(i)}{\sum_i f(i)} \qquad\qquad \text{(Equation 10)}$$

In the 1D case of the example, the constant is thus $\frac{N}{\sum_i i}$. The general expression to the right in Equation 12 is valid also for the 2D case. The 2D case is separately discussed and exemplified below and how the constant can be computed. With a time Td between image frames, impact time, time-to-impact, TTI, or $T_I$, can be computed according to:

$$TTI = T_I = \frac{T_d}{k} \qquad\qquad \text{(Equation 11)}$$

Example method for computing TTI

Based on the derived relations above, a method for computing TTI may be according to the following actions:

 1. Obtain two consecutive, first and second, image frames, with a time Td between the image frames.

 2. Find all LEPs in the first image frame, $f(i) = \begin{cases} 1 \; if \; LEP \\ 0 \; if \; not \; LEP \end{cases}$, with i=1..N

 3. Find new LEPs in the second image frame in relation to the first image frame,

$$f'(i) = \begin{cases} 1 \; if \; LEP \; and \; previous \; not \; a \; LEP \\ \qquad 0 \; otherwise \end{cases}$$

 4. Count all LEPs in the first image frame, $\Sigma f(i)$
 5. Count all new LEPs in the second image frame, $\Sigma f'(i)$
 6. Compute k e.g. as in Equation 12 using the counts from points 3 and 4 above.
 7. Compute TTI as in Equation 12 using he computed k and Td.

It is realized that in practical implementations with e.g. a large number or a continuous sequence of image frames, f(i) and f'(i) can be computed for each image frame and a new computed value of TTI can be provided per image frame. A TTI measure for use can e.g. be provided as running average of computed TTIs for the most recent X, say e.g. 3 or 5 image frames. If there is a sudden significant change in a computed TTI for the most recent image frame, and e.g. if the change is maintained for the next one or more image frame(s) (in order to reduce the risk of a temporal error causing the change), only the recent computed TTIs reflecting the change may be used to faster get a new TTI estimate, and/or when such change happens it can be used as early indicator that something has happened that may affect collision speed and TTI.

Results from simulation

A simulation was performed based on the relations and method above and using a 1D image. The image was zoomed in 150 steps to simulate movement towards the image sensor thereby forming 150 image frames. For the first 15 steps, or image frames, the zoom factor was 0.1 pixels per row/step. The next 15 steps the zoom factor was 0.2, and so on. For each step all LEPs were found, i.e. identified, by computation. This corresponds to performing actions 2-3 above. LEPs identified in an image corresponds to and can be used to form a LEP image.

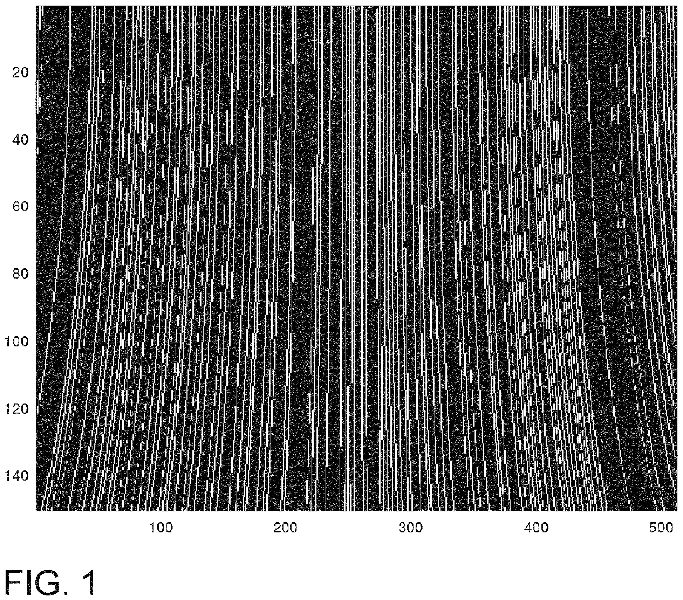

**Figure 1** shows the result when plotting the LEPs for each image in the simulation, i.e. the when plotting the LEP images for all 150 1D frames. Each line or row, i.e. the y-axis thus corresponds to an LEP image. The positions, or pixels, are along the x-axis. It can be seen that the FOE is approximately in the middle of the image since LEPs there stay at the same position. It can also be seen that LEPs are quite stable also at the edges in the beginning (top of the image), with smaller zoom per step corresponding to slower collision speed, and more active at the end (bottom of the image), with the greater zoom per step corresponding to increased collision speed. More active here refers to that the position of the LEPs changes more between each step/frame, i.e. there are more new LEPs formed.

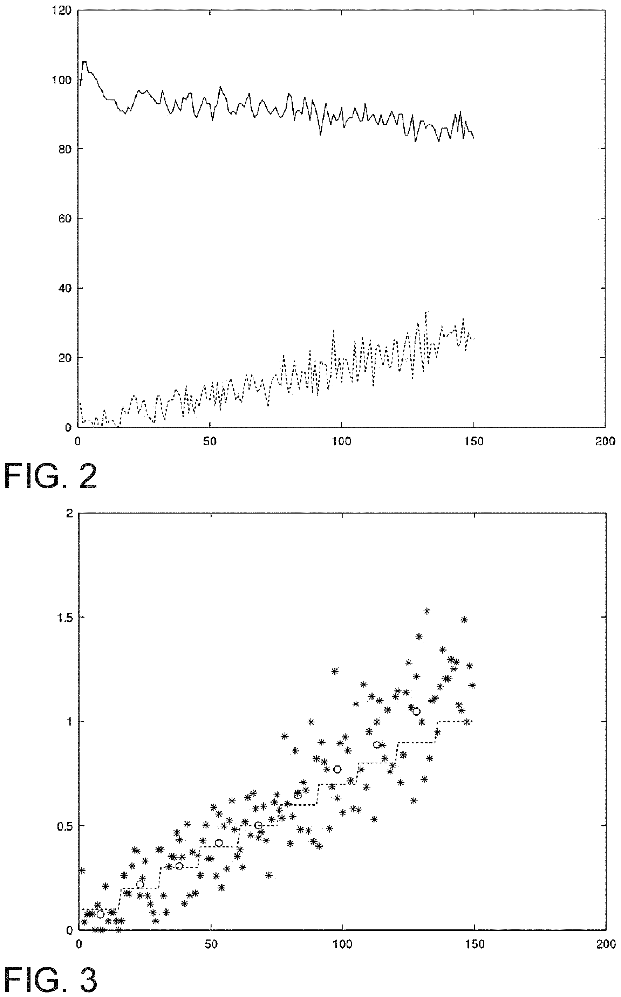

**Figure 2** shows computed sums of f(i) and f'(i), i.e. corresponding to performed actions 4-5 for all 150 image frames. The sum of f(i) is shown by the solid line and the sum of f'(i) by the dotted line. The x-axis thus shows the image frame numbers, which corresponds to time since there is a time, Td, between image frames. The y-axis is the count corresponding to said sums. Also here it can be seen that the activity increases at the end with increasing number of new LEPs between image frames, i.e. the dotted curve corresponding to the sum of f'(i) increases. A decrease in the sum of f(i) can also be observed. However, this decrease is mainly attributed to simulation artifacts due to that the simulation uses zoomed images. The zoom has a low pass filtering effect, i.e. details are magnified but no new details are added, thus reducing the number of LEPs.

If Equation 12 is applied to compute k and is then multiplied with N=512, the result is pixels per row/step as it was started with, i.e. the zoom factor. This can be utilized for comparison.

**Figure 3** shows for each step, i.e. for each image frame, the computed value of k*N (solid black) and the corresponding true value, i.e. the used zoom factor, drawn by a dotted line. The circles represents the average of 15 steps with the same step length for the computed values.

The comparison reveals that with pixels per row/step closer to 1, the computations perform worse.

However, from experiments it has been found that sufficiently accurate TTI measures can be possible up to pixel movements, or displacement, of up to about 3 pixels, e.g. between consecutive image frames.

Further, it has been found that the relation between the sums of f and f' may be used to find out if and/or when TTI measures based on the method above begin to become, and are becoming increasingly, unreliable. When the relation is such that a quotient corresponding to sum f' divided by sum f, such as $\frac{\sum_i f'(i)}{\sum_i f(i)}$ , becomes greater than about 0.7, this indicates that collision speed is larger than what reliably can be captured from a TTI measure point of view when using the above method. Note that the quotient itself can continue to be used as an indicator and/or can be used as an indicator even if TTI measures are not computed for the involved pixel data. For example, the quotient itself may indicate that there is some object movement, such as collision speed, and thus e.g. risk for collision. If the quotient continues to increase, this indicates increasing speed, also beyond 0.7, although the exact speed or TTI cannot be reliably computed. Hence, changes in said quotient may be used as indication of increase or decrease in collision speed. For example, if a TTI measure first is computed, e.g. when said quotient is well below 0.7, and then at some point it is found from computations, e.g. based on further image frames, that said quotient is at or well above 0.7, and e.g. stable or increasing, this may be interpreted as there is indication for collision much sooner than indicated by the latest reliable TTI measure. This is thus example of another type of measure indicative of impact time.

From the above it is realized that a measure indicative of impact time may not only be a measure of the impact time as such, i.e. TTI measure.

Moreover, in a practical situation, if needed, the risk of not being able to sufficiently accurately, or not at all, be able to compute a TTI measure, can be taken care of per use case and/or specific implementation, for example by making sure that cases and situations to be handled always cause pixel movements below, or specify that accuracy or operation is only valid up to, a certain threshold, e.g. up to a certain collision speed and that TTI cannot be correctly indicated, e.g. estimated, if the collision speed is too high. When designing for implementation of applications based on embodiments herein, one can e.g. make sure that all TTI situations to be dealt with will not result in pixel movements above a certain, e.g. predefined or predetermined, threshold value, e.g. 3, 2, 1 or 0.5 pixels between image frames, or e.g. between exposures of the same pixels of the sensor and that generates the pixel data being used. Designing for this may involve increasing the frame rate so that pixel movements will be below the threshold for all objects and speeds to be managed by the application, and make sure that hardware/software used in the implementation will be sufficient for handling this frame rate. As already indicated above, for some applications, where it e.g. is sufficient to detect if there is likely movement or not in a collision direction, i.e. "risk for impact or not", or in general when rough measures indicative of impact time are sufficient, it can be ok with pixels movement at or even above such threshold.

Number of LEPs

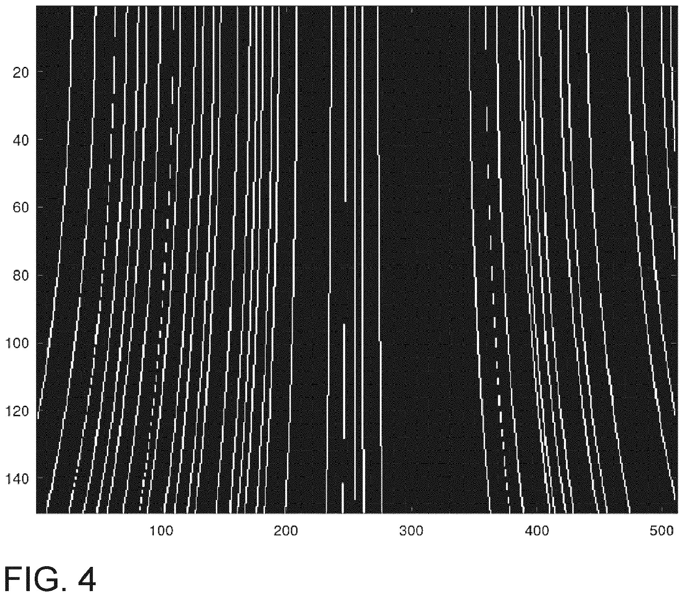

**Figure 4** is based on a low pass filtering of the same image as in Figure 1 and thereby with less LEPs and is to be used for illustrating that the method is relatively insensitive to the number of LEPs in an image. That is, in Figure 4 the same 1D image has been used as for the simulation above and then low pass filtered before said zooming resulting in the 150 image frames.

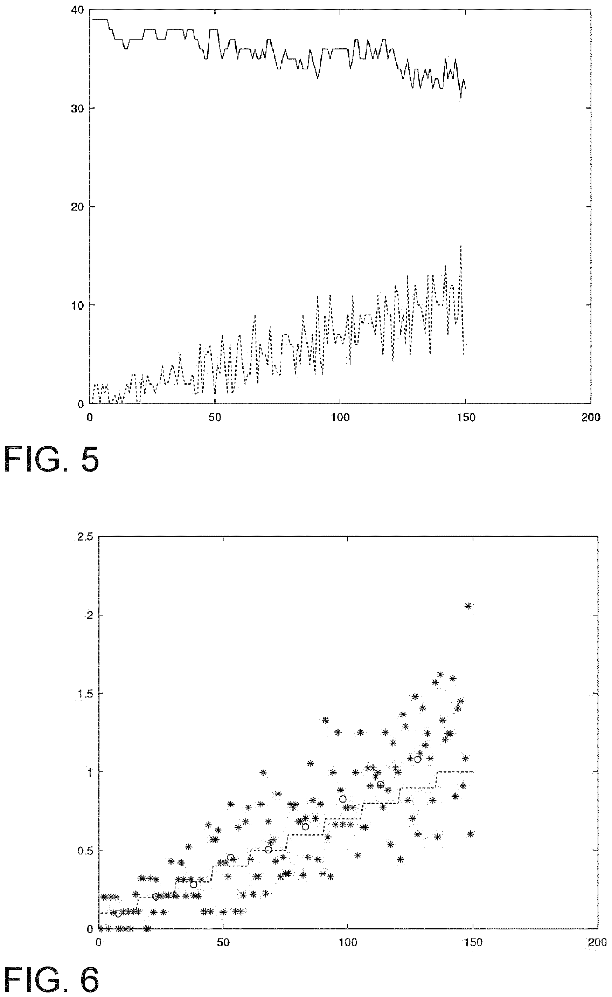

**Figure 5** shows a corresponding f(i) and f'(i) diagram as in Figure 2 but based on the LEP images of Figure 4. It can be seen as the low pass filtering resulted in about a factor 2.5 reduction of the number of LEPs and that new LEPs have correspondingly scaled down. It can also be seen that the relation f(i) and f'(i) is maintained.

**Figure 6** further investigates this. This figure shows a corresponding view as in Figure 3 but for the reduced number of LEPs case. It can be seen that the computed k value is more noisy, however the average value is still stable.

FOE position

To compute the k-value from Equation 12 the summation of all i-values is used, where the start should be from the position of the FOE.

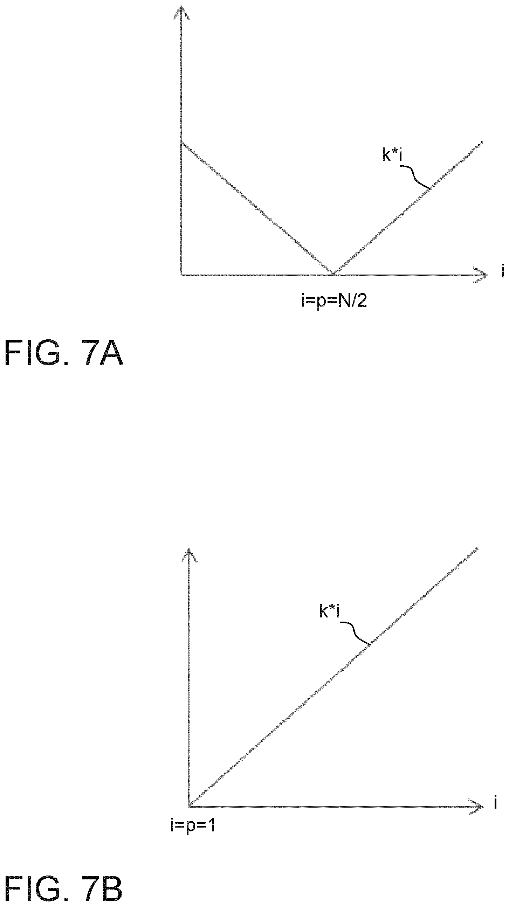

Figure 7a is an example with FOE in the center of the image.

Figure 7b is an example with FOE at the left corner.

In a general case where the FOE is at a pixel position i=p, the sum over pixel positions i corresponds to:

$$\sum i = \frac{N^2 + 3N - 2pN + 2p^2 - 2p}{2} \qquad \text{(Equation 14)}$$

, where N is as above, i.e. the total number of pixels i.

For p=N/2, i.e. as in Figure 7a, Equation 14 results in:

$$\sum i \approx \frac{N^2}{4} \qquad\qquad \text{(Equation 15a)}$$

For p=1, i.e. as in Figure 7b, Equation 14 results in:

$$\sum i \approx \frac{N^2}{2} \qquad\qquad \text{(Equation 15b)}$$

In other words, with knowledge of FOE, computations based on Equation 12 can be very simplified. This facilitates fast and resource effective implementation in hardware, such by means of near sensor image processing, e.g. based on the NSIP technology.

Also, it can be realized that with FOE somewhere in the field of view, $\Sigma\, i$ will be in the range $\frac{N^2}{4}$ to $\frac{N^2}{2}$.

Implementations of the method may e.g. be based on predetermined knowledge of FOE, or detection of the location of the FOE, and application of the above.

Extension to 2D

In a 2D case, i.e. in case of a 2D image sensor and/or 2D images, there are a number of different ways to define a LEP, as recognized by the skilled person. The two most common ways are the so called Chess board distance and the City block distance. In the Chess board case there are eight neighboring pixels to compare a center pixel to determine if it is a LEP or not. In the City block there are four neighboring pixels. As should be realized, what exact way that is used does not matter for the method and embodiments herein, but it should of course be the same definition used during execution of the method.

As already mentioned above, the general expression to the right of Equation 12 is also valid for a 2D case with pixel positions x,y instead of i, and hence Equation 12 can be written:

$$k = \text{constant} * \frac{\sum_i f'(x,y)}{\sum_i f(x,y)} \qquad\qquad \text{(Equation 16)}$$

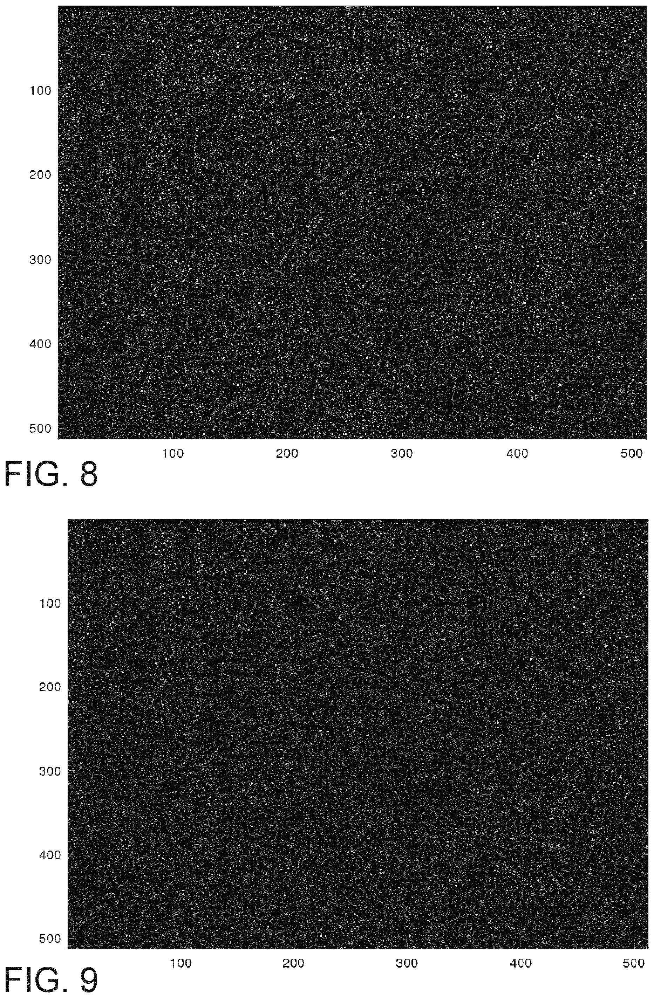

**Figure 8** shows LEPs generated from a 2D image, here a greyscale, i.e. black and white, 2D image, based on intensity values of pixels. The 2D image is the "famous" standard test image of the "woman in hat", more precisely of Lena Forsén or "Lenna", an image widely used in the field of image processing since 1973. In case of a color image, LEPs may also identified in relation to intensity values, or based on some other available pixel values that may suit better. In a specific situation and/or application, it is within the capacity of the skilled person to select suitable pixel values to use when determining if there is a LEP in a pixel position or not. What is shown may be termed a LEP image. The LEP image is here defined using a corresponding function f as above for the 1D case, i.e. where f(x,y)=1 in positions x,y with a LEP.

Note that while the LEPs in Figure 1 are from several image frames, the LEPs in Figure 8 are from only one image frame.

In a corresponding way as for the 1D case above, f'(x,y) is then defined as a positive difference between two consecutive LEP images f(x,y), e.g. at time instants t1 and t2 with a time period Td between, for example so that f'(x,y) will be 1 in positions x, y with new LEPs.

**Figure 9** shows f'(x,y) based on two LEP images formed from two consecutive "zoomed" versions of said 2D image from the same sequence as the LEP image in Figure 8. That is, zoom of the 2D image has been used similarly as above for the 1D case to form a sequence of images corresponding to, or simulating, image sensing of an object relatively moving towards an image sensor capturing images of the object.

It was simulated an image sequence of 15 images. The first six images were formed using a k-factor corresponding to a movement of 0.2 pixels/row. As can be realized from the LEP based images in Figures 8-9, each row in the example consists of 512 pixels. The following five image were then taken using a k-factor corresponding to 0.4 pixels/row, and the last four images were taken using a k-factor corresponding to 0.6 pixels/row. Hence the images in the sequence simulates three different "collision speeds " of an imaged object.

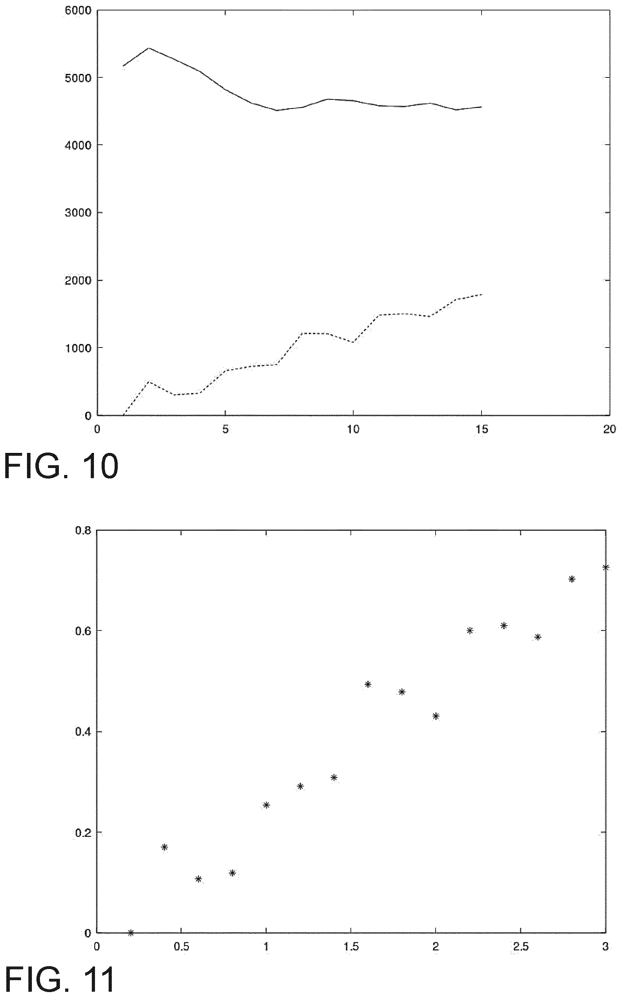

**Figure 10** shows the result when all 1's in f(x,y) and f'(x,y) are summed as a function of sequence of image frames, i.e. corresponding to a function of time. That is, what is shown is a similar diagram as in Figures 2 and 5 above but for the 2D case.

**Figure 11** shows the result from dividing the sums of f(x,y) and f'(x,y) from Figure 10 with each other and application of the constant scale factor, i.e. applying Equation 12. The result is, as should be expected, three clearly visible clusters with a scale factor of 2 and 4 between them. The clusters indicate said three different collision speeds.

In the 1D case, see e.g. Equation 12, k is approximated by:

$$k = \frac{1}{\Sigma i} \frac{N}{\Sigma f(i)} \Sigma f'(i) \qquad \text{(Equation 17)}$$

With a centrally located FOE, as explained above in connection with Equation 15a, this gives:

$$kN = 4 \frac{\Sigma f'(i)}{\Sigma f(i)} \qquad \text{(Equation 18)}$$

Here, kN means the relative movement between two images of two pixels on the opposite sides of the image, i.e. they are N pixels apart and move in opposite directions with FOE centered in the middle between the two outmost pixels. For example, if the LEP in the leftmost pixel moves half a step to the left while the rightmost LEP moves half a pixel to the right, then the relative movement kN=1/2+1/2=1 between the two outermost LEPs.

It can be shown that in a 2D case, k can be approximated by:

$$k = \frac{2}{\Sigma \sqrt{x^2+y^2}} \frac{N^2}{4 \Sigma f(x,y)} \Sigma f'(x,y) \qquad \text{(Equation 19)}$$

In other words, the constant in Equation 16 is here $\dfrac{N^2}{2 \Sigma \sqrt{x^2+y^2}}$.

Further, the following approximation can be made when the FOE is in the center of the image.

$$\Sigma \sqrt{x^2 + y^2} \approx \Sigma r = \frac{2\pi}{3} R^3 \approx \frac{2}{3\sqrt{\pi}} N^3 \qquad \text{(Equation 20)}$$

, since it can be approximated:

$$R^2 \pi = N^2 \implies R = \frac{N}{\sqrt{\pi}} \qquad \text{(Equation 21)}$$

The difference in movement between two pixels at the distance N will then be:

$$kN \approx \frac{3}{4} \sqrt{\pi} \frac{\Sigma f'(x,y)}{\Sigma f(x,y)} \qquad \text{(Equation 22)}$$

Hence, also in the 2D case, computations based on Equation 16, i.e. such as Equation 19, can be simplified and thus facilitate fast and resource effective implementation in hardware, such by means of near sensor image processing, e.g. based on the NSIP technology.

The total number of pixels N is typically known and predetermined information, e.g. according to the image sensor that have been used. As should be realized, correspondingly as for the 1D-case discussed above, when kN or k is known, e.g. by computing it based on Equation 20, TTI can be computed as in Equation 13. Hence, with e.g. a time Td between image frames, time-to-impact, $T_{TTI}$ or $T_I$, can be computed as $\dfrac{T_d}{k}$.

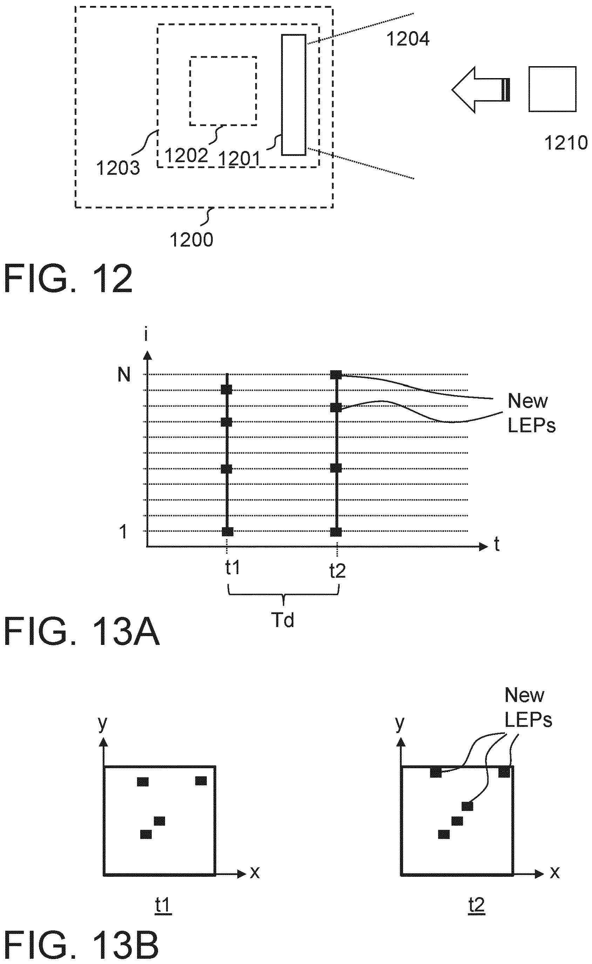

**Figure 12** schematically illustrates a situation with an image sensor 1201 and an object 120 relatively moving towards the image sensor within its field of view (FOV) 1204 indicated by dotted lines. The image sensor 1201 sequentially images the object as it moves, i.e. senses pixel data in a sequence, e.g. in the form of a sequence of image frames. The sensor may be 1D or 2D sensor, i.e. pixels of the sensor may be arranged in one or two dimensions. The pixels data comprises pixel values of the pixels of the sensor, each values associated with a pixel position, typically the position of the sensor element that sensed the light resulting in the pixel value. The image sensor may be part of or comprised in an apparatus 1200 or system, e.g. an image sensing apparatus, device or system, that e.g. may implement or correspond to a sensor device based on embodiments herein. The apparatus 1200 may comprise a data processing circuitry 1202 or means, e.g. processor, for operating on the pixel data from the sensor, which may also include memory elements. The data processing circuitry 1202 and the image sensor may be integrated in the same entity or unit, or even in or on the same chip, as the image sensor. They may even be part of one and the same architecture, such as a NSIP based architecture mentioned above.

**Figure 13A** is a schematic and simplified drawing to exemplify the principle of new LEPs mentioned above and further discussed below for embodiments herein. The figure shows two 1D image frames with pixel positions i, ranging from 1... N. A first image frame is shown at a point t1 in time and a second image frame is shown at a point t2 in time. The time difference between the image frames is e.g. determined by a frame rate that an image sensor that have captured the images are operating at. In the first image frame at t1 there is marked out LEPs in four pixel positions i. The LEPs are marked out by filled black squares. The sum of LEPs is thus 4. In the second image frame at t2 there is also 4 LEPs, but only two are in the same position as LEPs in the image frame at t1. There are also two LEPs in new pixel positions. These are thus new LEPs in relation to the LEPs of the image frame at t1. The sum of new LEPs is thus 2.

**Figure 13B** is also a schematic and simplified drawing to exemplify the principle of new LEPs, but here in a 2D case. The figure shows two 2D images at points t1 and t2 respectively, i.e. similar as above for the 1D example. There may also here be N pixels positions in total per image but distributed in 2D, in the example with coordinates x, y. Specific pixel position without LEPs are not marked out, but positions with LEPs are marked with filled black squares. In the first image at t1 there are 4 LEPs at 4 pixel positions, respectively. In the second image at t2 there are 5 LEPs, with two of them at the same positions with LEPs as in the image at t1. There are thus 3 new LEPs in the image at t2 compared to the image at t1.

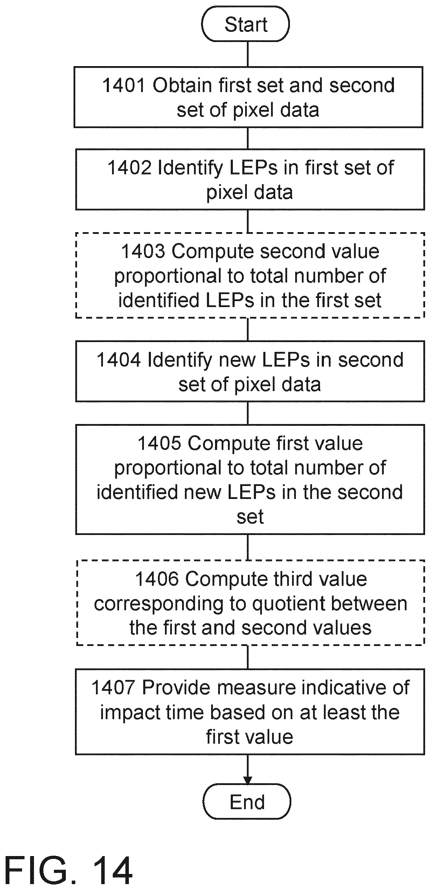

**Figure 14** is a flowchart schematically illustrating a method according to embodiments herein and that is based on the above. The actions below, which may form the method, are for providing a measure indicative of impact time between an image sensor, e.g. the image sensor 1201, and an object, e.g. the object 1210, relatively moving at least partially towards, or away from, the image sensor. The method and action may be performed by an apparatus, e.g. the apparatus 1200.

Note that the actions below may be taken in any suitable order and/or be carried out fully or partly overlapping in time when this is possible and suitable.

### Action 1401

It is obtained image data comprising a first set of pixel data for pixel positions, e.g. pixel positions 1..N, of the image sensor and a second set of pixel data for said pixel positions. The pixel data at each of said pixel positions, e.g. for each pixel position i of the 1..N pixel positions, in the first set relate, e.g. correspond, to sensed pixel data by the image sensor, when imaging said object a first time, e.g. at t1, for that position. For example the image sensor 1201 imaging the object 1210 at t1. The pixel data at each of said pixel positions in the second set relate, e.g. correspond, to pixel data sensed by the image sensor, when subsequently imaging said object a later second time, e.g. at t2, for that position. For example the image sensor 1201 imaging the object 1210 at t2 when it has moved closer to the image sensor 1204 compared to its position at t1.

Said pixel positions are thus the same for the first and second sets of pixel data. The pixel positions typically correspond to all, i.e. the number of, pixels of the image sensor used. However, the pixel positions may in some embodiments correspond to only a subset of the total number of pixels of the image sensor, and/or images generated by the image sensor may be processed and e.g. downsampled before embodiments herein are applied.

Sensing at said later second time, e.g. t2, may be a certain time period, e.g. Td, after the first time, corresponding to time difference between pixel data capturing occasions, such as the time period between image sensor exposures, resulting in the first and second pixel data.

In embodiment with synchronous sensing of all the pixel data in each set, the first set of pixel data typically corresponds to pixel data of a first image frame and the second set of pixel data corresponds to pixel data of a subsequent, second image frame. The image frames may thus e.g. be part of a sequence of image frames sequentially imaging said object, with said certain time period (Td) between image frames. In this case said certain time period thus corresponds to the time difference between the two image frames, e.g. between when the object was captured by a second image frame at a time t2 and a first image frame at a time t1, i.e. Td=t2-t1.

However, in other embodiment there may be asynchronous sensing involved. The latter may be preferred in some circumstances with implementation of pixel data processing close to or in integration with the image sensor, e.g. in case of a NSIP architecture or similar, and/or with LEP detection directly on sensed pixel data. The asynchronous sensing may enable more efficient hardware utilization and/or reduce hardware resources needed for implementation since the same hardware thereby may sequentially operate on data resulting from different pixel positions in the same set of pixel data. In the case of asynchronous sensing, the time difference, e.g. Td, between exposures, e.g. at t1 and t2, resulting in the pixel data of each position in the first and second set should be the same, but the asynchronous sensing means that there may be different t1's and t2's involved that results in Td.

Note that "obtain the image data" in the present action in some embodiments involves sensing by the image sensor, in some embodiments it involves obtaining or receiving sensed pixel data from the image sensor that may be in the same or another apparatus, device or unit than executing the method. In some embodiments, the image sensor is not directly involved but may have produced the image data prior to execution of the method. Obtaining the image data may in this case e.g. simply be obtaining or receiving it from an intermediate storage.

The present action may fully or partly correspond to action 1 in the above discussed example method for computing TTI.

## Action 1402

Local extreme points, i.e. LEPs, are identified in the first set of pixel data.

LEP may be defined as discussed above and in the prior art. Hence, as used herein, a LEP is present in an pixel position when an pixel data value of that image position is a maxima and/or minima value in relation to values of pixel data of all, or at least two, pixel positions that are adjacent to the pixel position of the LEP. Thus, two closest neighboring pixels can never be LEPs at the same time. 1-dimensionally, a LEP in a pixel position is determined in relation to at least its two closest neighboring pixel positions. 2-dimensionally a LEP in a pixel position is typically identified in relation to its four or eight closest neighboring pixel positions. An example of a pixel data value is an intensity value, but also other kind of pixel data values may be used depending what is considered to be best in a given situation, e.g. in view what image sensor is being used, noise conditions, what kind of object is to be captured in what environment, light conditions, what is suitable to capture details of the object, etc.

As should be realized, identifying LEPs in a set of pixel data involves finding out, e.g. determine, in which pixels position there are LEPs, or in other words, finding pixel positions, relating to the pixel data, with pixel data values corresponding to LEPs, such as indicated above. As realized, whether a pixel is a LEP or not may depend on the exact LEP definition being used. A pixel may be LEP according to different LEP definitions at the same time but it may happen that different definitions come to different conclusions. This has no consequence as long as one and the same LEP definition is used, which typically is the case when executing the method. Typically the LEP definition being used is predetermined and the same during execution of the method. Using different definitions during execution would typically only complicate implementation and would also likely result in worse performance and result, e.g. a less accurate TTI measure.

The present action may fully or partly correspond to action 2 in the above discussed example method for computing TTI.

## Action 1403

It may be computed, e.g. counted, a second value proportional to the total number of said identified LEPs, e.g. $\sum_i f(i)$, in the first set of pixel data. Another computed, first, value, is described below under Action 1405. In some embodiments, the present action is not performed and the second value is not computed, only the first value. However, when both values are computed, it is typically convenient to first compute the second value, which is the reason that the present action and the second value is presented before Action 1405 and computation of the first value.

The second value may be said total number and thus be computed by counting, such as computing the sum $\sum_i f(i)$, with f(i)=1 for positions with LEP and 0 otherwise. However, as realized it, may suffice that the second value is proportional to this sum, and may thus e.g. correspond to the sum scaled by a constant value that may be predetermined. The effect of the scaling may be compensated at a later stage, or does not matter in some embodiments e.g. depending on the type of measure provided by the method.

The present action may fully or partly correspond to action 4 in the above discussed example method for computing TTI.

## Action 1404

New LEPs are identified in the second set of pixel data, which new LEPs are LEPs in pixel positions without identified LEPs in the first set of pixel data.

This action may involve to first identify LEPs and comparing with the result from Action 1402. It is also possible to look for LEPs only in positions without LEPs in Action 1402 since only these can contain new LEPs, obviously. However, since the LEPs in the second set may be used "as the first set" of a next iteration of the method, i.e. in an iteration where it is obtained also a third set of pixel data, sensed subsequently, i.e. after the second set, at a later third time, t3, and that is used "as a new second set" for said next iteration, it may be preferred to identify all LEPs as part of the present action, similarly as in Action 1402, and thereafter identify which LEPs are new. This can be realized e.g. using simple bitwise Boolean operations, facilitating implementation in near sensor HW, e.g. based on the NSIP architecture. For example, if LEPs are identified and LEP images are formed based on the examples above, e.g. with value 1 in positions with LEPs and 0 in the other positions, a bitwise XOR operation may be performed between the LEP images, followed by a bitwise AND operation between the result and the second LEP image, which results in a third LEP image with values 1 only for the new LEPs.

The present action may fully or partly correspond to action 3 in the above discussed example method for computing TTI.

**Action 1405**

A first value is computed, e.g. counted, and that is proportional to the total number of said identified new LEPs, e.g. $\sum_i f'(i)$, in the second set of pixel data

The first value may be the total number of the new LEPs and thus be computed by counting, such as computing the sum $\sum_i f'(i)$, with f'(i)=1 for positions with new LEPs and 0 otherwise. However, as should be realized, similar as for the second values in Action 1403, it may also here suffice that the first value is proportional to the sum, and may thus e.g. correspond to the sum scaled by a constant value that may be predetermined. The effect of such scaling may be compensated at a later stage or does not matter in some embodiments, e.g. depending on the type of measure provided by the method.

The present action may fully or partly correspond to action 5 in the above discussed example method for computing TTI.

**Action 1406**

A third value corresponding to a quotient, e.g. $\dfrac{\sum_i f'(i)}{\sum_i f(i)}$, between said first and second values may be computed. Said measure indicative of impact time may then be based on said quotient.

This is thus an example of how it can be quantified how said first and second values relate to each other. As understood from the specific examples herein, the quotient is e.g. used when the measure is an estimate of impact time.

The present action may fully or partly correspond to action 6 in the above discussed example method for computing TTI.

**Action 1407**

Said measure indicative of impact time is provided, the measure being based on at least said first value. In some embodiments it is based on how said first and second values relate to each other, and may e.g. be based on said third value.

The fact that said first and second values contain information on TTI, as exploited in embodiments herein, has been described and explained above.

Said measure indicative of the TTI is in some embodiments an estimate of the TTI, in other embodiments it may e.g. correspond to a more rough indication, e.g. indicating if the object, e.g. the object 1210, is not moving or relatively moving away or towards the image sensor, e.g. the image sensor 1201, there being a risk, and/or an increased or decreased risk for collision, etc.

For example, as discussed above, said first value, based on a sum of the new LEPs, can as such be used as a rough indicator of change in subsequent image frames imaging the object, e.g.1210. If several first values for consecutive image frames are computed, an increase in these indicate an increasing number of new LEPs that may indicate an increase in collision speed. Also, since the second value, as also indicated above, does not change much over subsequent image frames imaging the object and may be considered constant, at least over a time period when the same object is being imaged, although the first value will change, it may suffice to compute the second value once or more seldom than the first value to reduce computations. Hence in some embodiments, one or more first values are computed and used with a previously computed second value to e.g. provide an estimate of the TTI.

Moreover, as also discussed in some detail above, said third value, such as $\dfrac{\sum_i f'(i)}{\sum_i f(i)}$, may be used as indication of impact time, and/or be computed to determine if e.g. the computed estimate of the TTI based on the third value shall be considered sufficiently accurate or not. For example, if it is greater than about 0.7, this may be used as indication that collision speed is larger than what reliably can be captured from a TTI measure point of view by the method. When above 0.7, third value(s) as such, or first value(s), may be used to provide a rough measure indicative of impact time, e.g. if there is (still) risk for collision, presence of collision speed, or if a previously computed TTI is increasing or decreasing.

In any case, several measures may be provided by repetitive execution of the method, and the measures may then be used to accomplish a more stable and/or better, e.g. more accurate, indication, e.g. by averaging, and/or the measures may be used to find information on changes in how the object moves in relation to the image sensor.

In some embodiments where Action 1406 is performed, said measure indicative of impact time provided in the present action is further based on a coefficient, e.g. 1/k or k, that corresponds to said third value multiplied with a constant value that is constant given the total number, e.g. N, of said pixel positions, e.g. 1..N, and position of Focus of Expansion, i.e. FOE, of the object in relation to said pixel positions. For example, as described above, the constant value will vary within a range of values depending on position of the FOE when N is constant as typically the case, e.g. given the image sensor used or known resolution of image frames used. The FOE may e.g. be located centrally, e.g. in the middle of pixels or at a corner, as illustrated and explained in examples above.

Embodiments where k is determined, are, as realized from the above examples, at least relevant when the measure is an estimate of impact time.

The coefficient, or k, may be computed in accordance with or based on said above examples, such as depending on if the image sensor is 1D or 2D, and e.g. depending on where FOE is, or is assumed to be.

In some embodiments, said constant value is a predetermined value.

The total number of pixel positions involved, i.e. N, is typically predetermined, e.g. known given the image sensor and/or how it is configured. It may also e.g. be known, or can be found out, in advance which pixel position(s) corresponds to the FOE, or a location from where the object, e.g. 1210, move towards the image sensor, e.g. 1201, and that is captured by pixel position(s) of the image sensor that will correspond to the position(s) of the FOE. As explained above, this gives the constant value that thus may be predetermined.

Alternatively the predetermined constant value may result from calibration performed prior to executing the method. During the calibration a calibration object having a known TTI can be used as the object or simulated object similar as in the simulation based examples above may be utilized for calibration. First and second values as above may then be computed from first and second pixel data sets imaging the calibration object, and a third value as above may be computed from the first and second values. For the calibration, a coefficient, e.g. k, may be computed from said known TTI and knowledge of the time period Td between the pixel values of the first and second sets, e.g. computed from $k = T_d/$ TTI, i.e. based on Equation 13. The constant value may then be computed from the computed coefficient and said third value (or from k and said first and second values), for example:

$$\text{constant value} = k \text{ / third value} = \frac{k * \sum_i f(i)}{\sum_i f'(i)} \qquad \text{(Equation 23)}$$

Note that Equation 23 is just a rewrite of Equation 16. When the constant value has been determined through calibration it can then be used for an object where TTI is not known to find a k for this object and which k then can be used to compute TTI for the object based on embodiments herein.

Such calibration as described above may e.g. be used to form a set with multiple predetermined constant values for different FOEs, respectively, i.e. so there is available several predetermined constant values associated with different FOEs, respectively. Prior to executing the method according to embodiments herein and described in relation to figure 14, and based on knowledge of the FOE of the object in the method, a suitable predetermined constant can be selected from the set with multiple predetermined constant values for different FOEs. A possibility is also to select several such constants and compute TTI according to the method for each selected constant, resulting in e.g. several k's and TTIs that differs only due to differences in FOE. If this is done when one of several different FOEs are possible for the object but it is not known exactly which one is the actual FOE, it can be computed several TTI values where at least one should be correct or more correct, e.g. more accurate, than the others. If the FOE of the object is known to be in an area of pixels, TTI can be computed with constants corresponding to FOEs for all of these pixels and then a range of TTI values and/or average TTI can be computed from this.

In some embodiments, said constant value is instead obtained by computing it based on the total number of said pixel positions, e.g. N, and information on where the FOE of the object is located in relation to said pixel positions, e.g. at which pixel position i of 1... N pixels positions, FOE is located, e.g. at a pixel position p as used in examples above. The computation may be based on an analytical or numerical expression of the constant value, e.g. as shown in examples herein and discussed above. The expression may be based on approximations, e.g. utilizing that the total number N is large.

As already indicated, in some embodiments said measure corresponds to an estimate of said impact time, and said provision of the measure may comprise computation of said estimate based on said coefficient, e.g. k, and a time difference, e.g. $T_d$, between when pixel data of the second set were sensed and when pixel data of the second set were sensed. For example, when the coefficient is k and the time difference is Td, the TTI estimate can be computed as Td/k. This may thus correspond to computations based on Equation 13. In these embodiments, said third value may thus correspond to said first value divided by said second value, with the second value corresponding to the total number of said identified LEPs, e.g. $\sum_i f(i)$, in the first set of pixel data and the fist value corresponding to the total number of said identified new LEPs, e.g. $\sum_i f'(i)$, in the second set of pixel data.

Hence, using information discussed above in an example, said coefficient may correspond to

$$k = \text{constant value} * \frac{\sum_i f'(i)}{\sum_i f(i)}, \text{ where } \frac{\sum_i f'(i)}{\sum_i f(i)} \text{ thus corresponds to said third value, with i indicating a pixel}$$

position among all pixel positions 1..N, $\sum_i f(i)$ is the total number of said identified LEPs in the first set of pixel data for pixel positions 1..N and $\sum_i f'(i)$ is the total number of said identified new LEPs in the second set of pixel data for pixel positions 1..N.

In some embodiments, the method is performed under conditions such that the movement of the object during said time difference, e.g. Td, would cause a 1-pixel feature of the object captured by the image sensor and present in both the first and second sets of pixel data, to move less than a predefined, e.g. predetermined, distance, such as 0.5, 1, 2 or 3 pixels. The distance may thus correspond to a threshold. Lower distances may be used to accomplish some margin for practical cases. As explained above in connection with Figure 3, this may enable a more accurate measure, e.g. when the measure is estimate of impact time. Said conditions may be predetermined and/or be predefined. The condition may involve the object, image sensor and/or an apparatus(es) performing the method. Said conditions may be based on assumption and/or exclusion, e.g. since other conditions can be ruled out or are not possible or sufficiently unlikely, at least for all situations of practical interest and/or to be handled by an implementation. It may e.g. be known or assumed that no object relevant for an implementation will ever move faster than a certain speed that thus may be predetermined or predetermined. With knowledge of this it is realized that it is matter of implementation design, e.g. by designing hardware and/or software involved in the image sensor and/or in execution of the method to make sure that the method can be performed under said conditions. In some embodiments, the conditions corresponds to restraints or restrictions that may be predetermined or predefined.

As realized from the above, in some embodiments, the provision in present action 1407 involves some processing and/or computations based on the first and/or second values, with or without involving said third value and/or said coefficient, e.g. k. In a simple case, the measure is the first value, or both the first and second values in combination. In some embodiments a difference between the first and second values may be used as the measure, or just a comparison of the values to find which is largest or smallest, or to find a degree of difference. In some embodiments, the measure is the third value, or is said estimate of impact time based on the third value.

The present action may fully or partly correspond to action 7 in the above discussed example method for computing TTI.

Compared to e.g. said prior art method based on LEPs for providing an estimate or indication of TTI or similar, such as disclosed in said WO 2013107525 A1, that is based on longevity or stability of LEP runs in pixel positions, the present method offers improvements, such as improved noise resistance since there are no LEP runs that can be destroyed by noise. The present method also enables faster provision of a useful measure, such as a TTI estimate, since it e.g. may be based on only two image frames, while said prior art method needs longer sequence of image frames to capture LEP runs before a useful measure can be provided.

Further, as already indicated, embodiments herein may advantageously be implemented by near image sensor processing, where e.g. LEP images of very small size are formed for identified LEPs and new LEPs and it may then just be a matter of adding binary 1's in each "LEP image" and/or its subsequent "new LEP image" and compare the sums, e.g. divide the sums with each other as in the equations discussed above. Then an estimate of impact time can be provided by simply multiplying with a constant value that may be predetermined and/or the same for several consecutive executions of the method, each execution resulting in a new measure indicative of the same impact time or of a changed impact time, e.g. due to change in impact speed relative to the object. Moreover, as realized from the above, to implement some embodiments, it may be sufficient to provide a single sum, e.g. corresponding to said first value, which simply may be accomplished by bitwise Boolean operations between consecutive LEP images to accomplish the "new LEP image" and then add the resulting binary 1's.

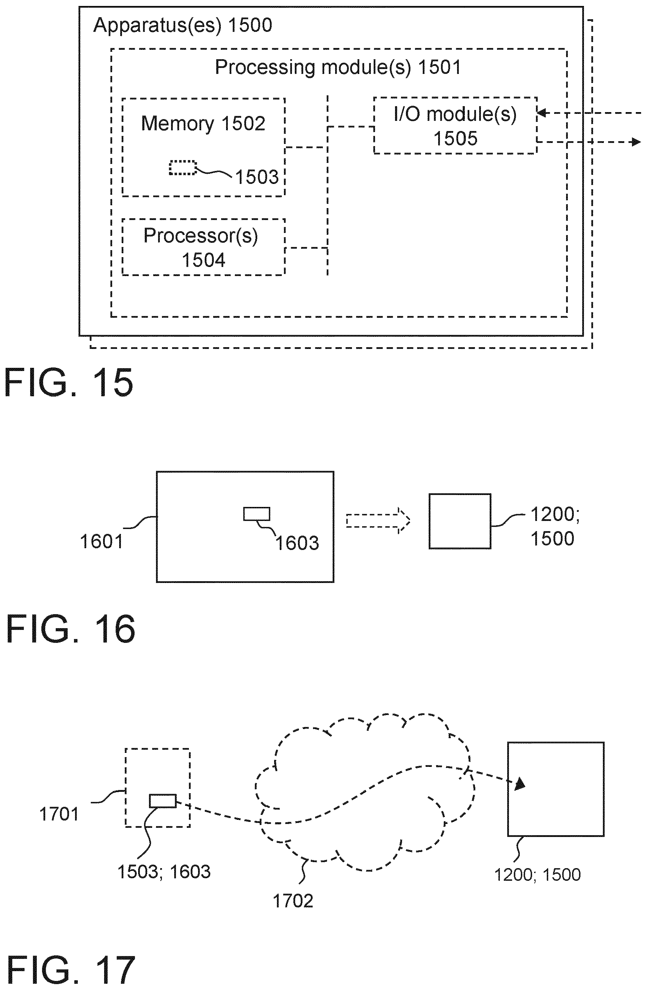

**Figure 15** is a schematic block diagram for illustrating embodiments of how one or more apparatuses 1500, e.g. as discussed above, such as the apparatus 1200, may be configured to perform the method and actions discussed above in connection with Figure 14. The apparatus(es) 1500 may correspond to or comprise computer(s) and/or hardware unit(s) with processing capability that e.g. may be dedicated and/or configured specifically for implementing the method, and may be integrated with the image sensor, e.g. may correspond to a TTI or TTI based sensor or camera unit. In some embodiments the apparatus(s) 1200 may correspond to one or more computers. Typically said apparatuses 1500 is a single apparatus configured to perform the method but several apparatuses, e.g. corresponding to or part of a system or network, may be involved if it is e.g. desirable to perform some actions of the method in a distributed manner by different apparatuses. Note that the image sensor as such may or may not be comprised in the apparatus(es) 1500, as already indicated above. In case the apparatus(es) 1500 is an apparatus based on a NSIP architecture, the image sensor should of course be part of the apparatus. However, in other embodiments, the apparatus(es) 1500 may operate on pixel data resulting from the image sensor and e.g. received externally from the apparatus(es) as such.

Hence, the apparatus(es) 1500 is for providing a measure indicative of impact time between an image sensor, e.g. the image sensor 1201, and an object, e.g. the object 1201, relatively moving at least partially towards, or away from, the image sensor.

The apparatus(es) 1500 may comprise processing module(s) 1501, such as a means, one or more hardware modules, including e.g. one or more processors, and/or one or more software modules for performing said method and/or actions.

The apparatus(es) 1500 may further comprise memory 902 that may comprise, such as contain or store, first computer program(s) 1503. The first computer program(s) 1503 comprises 'instructions' or 'code' directly or indirectly executable by the apparatus(es) 1500 to perform said method and/or actions. The memory 1502 may comprise one or more memory units or modules and may further be arranged to store data, such as configurations and/or pixel data and/or intermediate data, involved in or for performing functions and actions of embodiments herein.

Moreover, the apparatus(es) 1500 may comprise one or more processors 1504 as exemplifying hardware module(s), which may comprise or correspond to one or more processing circuits. In some embodiments, the processing module(s) 1501 may comprise, e.g. 'be embodied in the form of' or 'realized by' processor(s) 1504. In these embodiments, the memory 1502 may comprise the first computer program(s) 1503 executable by the processor(s) 1504, whereby the apparatus(es) 1500 is operative, or configured, to perform said method and/or actions thereof.

Typically the apparatus(es) 1500, e.g. the processing module(s) 1501, comprises Input/Output (I/O) module(s) 1505, configured to be involved in, e.g. by performing, any communication to and/or from other units and/or devices, such as sending and/or receiving information to and/or from other devices, e.g. receiving pixel data in case of the image sensor being external. In any case, the I/O module may be involved for providing the measure, e.g. as an output value or signal. The I/O module(s) 1505 may be exemplified by obtaining, e.g. receiving, module(s) and/or providing, e.g. sending, module(s), when applicable.

Further, in some embodiments, the apparatus(es) 1500, e.g. the processing module(s) 1501, comprises one or more of an obtaining module(s), identifying module(s), computing module(s) and providing module(s), as exemplifying hardware and/or software module(s) for carrying out actions of embodiments herein. These modules may be fully or partly implemented by the processor(s) 1504.

Hence:

The apparatus(es) 1500, and/or the processing module(s) 1501, and/or the processor(s) 1504, and/or the I/O module(s) 1505, and/or the obtaining module(s) are operative, or configured, to obtain said image data comprising said first set of pixel data and said second set of pixel data.

Further, apparatus(es) 1500, and/or the processing module(s) 1501, and/or the processor(s) 1504, and/or the identifying module(s) are operative, or configured, to identify the LEPs in the first set of pixel data.

Moreover, the apparatus(es) 1500, and/or the processing module(s) 1501, and/or the processor(s) 1504, and/or the identifying module(s) are also operative, or configured, to identify said new LEPs in the second set of pixel data.

The apparatus(es) 1500, and/or the processing module(s) 1501, and/or the processor(s) 1504, and/or the computing module(s) are as well operative, or configured, to compute said second value.

Furthermore, the apparatus(es) 1500, and/or the processing module(s) 1501, and/or the processor(s) 1504, and/or the I/O module(s) 1505, and/or the providing module(s) are operative, or configured, to provide said measure indicative of impact time.

The apparatus(es) 1500, and/or the processing module(s) 1501, and/or the processor(s) 1504, and/or the computing module(s) may also be operative, or configured, to compute said second value.

The apparatus(es) 1500, and/or the processing module(s) 1501, and/or the processor(s) 1504, and/or the computing module(s) may also be operative, or configured, to compute said third value.

In some embodiments, e.g. when the measure corresponds to an estimate of said impact time, the apparatus(es) 1500, and/or the processing module(s) 1501, and/or the processor(s) 1504, and/or the computing module(s) are operative, or configured, to operate under said conditions such that the movement of the object during said time difference would cause a 1-pixel feature of the object captured by the image sensor and present in both the first and second sets of pixel data, to move less than said predefined distance.

**Figures 16-17** are a schematic drawings illustrating some embodiments relating to computer programs and carriers thereof.

Figure 16 schematically illustrates a hardware synthesizing device(s) 1601 and a second computer program(s) 1603 that when loaded into and executed by the hardware synthesizing device(s) 1601 causes hardware, typically a chip, to be synthesized, and/or be configured, as the apparatus 1500 or 1200 according to embodiments herein and as described above. The chip being synthesized may e.g. be or be based on Field Programmable Gate Array (FPGA) technology or similar, or may e.g. be an Application Specific Integrated Circuit (ASIC). The hardware synthesizing device(s) 1601 may be a conventional one for hardware synthesizing for the type of hardware to be synthesized. The second computer program(s) 1603 may be based on some conventional programming language for hardware synthesizing, e.g. a suitable Hardware Description Language (HDL), such as Very High Speed Integrated Circuit Hardware Description Language (VHDL), or some other programming language adapted for or even specific for the type of hardware being synthesized. In some embodiments, e.g. when an ASIC is synthesized, the second computer program(s) 1603 may be or comprise binary file(s), and/or file(s) in some proprietary format, that describes the design of the ASIC to be produced for a manufacturer thereof and executable by device(s) part of a system used in manufacturing of ASICs. In such case the second computer program(s) 1603 may comprise both a program, e.g. in VHDL, that is executed on a computer and also a file produced by this for is in the ASIC manufacturing.

The hardware synthesizing device(s) 1601 may e.g. comprise a computer executing the second computer program(s) 1603 and one or more computer controlled devices connected to the computer that performs the hardware synthesizing as such, e.g. by operating on a FPGA-chip.

As used herein, a hardware being synthesized refers to there to that there is formed hardware, e.g. electronic circuit(s), by physically forming or generating such and/or causing physical, typically permanent, changes to synthesizable hardware unit or piece, e.g. a FGPA chip. This is clearly a difference to a more conventional computer program that executes on existing hardware, utilizing e.g. electronic circuits already in place. Such computer program controls hardware, e.g. in order to perform certain action, but do not generate the hardware.

The first computer program(s) 1503 was described above and may thus comprise instructions that when executed by e.g. the apparatus(s) 1500 or 1200, e.g. the processing module(s) 1501 and/or the processor(s) 1504, cause the apparatus(es) 1500 or 1200 to perform as described above, such as described in connection with Figure 14. In other words, the first computer programs(s) 503 are of more conventional type.

**Figure 17** schematically illustrates that there in some embodiments is provided one or more carriers, or more specifically data carrier(s), e.g. computer program product(s), comprising the first computer program(s) 1503 and/or the second computer program(s) 1603, referred to as the computer program(s) 1503 and/or 1603 in the following. The carrier, or each one of said carriers, may be one of electronic signal(s), optical signal(s), radio signal(s), and a computer readable storage medium or media, e.g. a computer readable storage medium or media 1701 as schematically illustrated in the figure. The computer program(s) 1503 and/or 1603 may thus be stored on the computer readable storage medium or media 1701. By carrier may be excluded a transitory, propagating signal and the data carrier may correspondingly be named non-transitory data carrier. Non-limiting examples of data carrier(s) being a computer readable storage medium is a memory card or a memory unit, such a memory stick, a disc storage medium, or a mass storage device e.g. based on hard drive(s) or Solid State Drive(s) (SSD). The computer readable storage medium or media 1701 may be used for storing data accessible over a computer network 1702, e.g. the Internet or a Local Area Network (LAN). The computer program(s) 1503 and/or 1603 may furthermore be provided as pure computer program(s) or comprised in a file or files. The file(s) may be stored on the computer readable storage medium or media 1701 and e.g. available through download e.g. over the computer network 1702 as indicated in the figure, e.g. via a server. The server may e.g. be a web or File Transfer Protocol (FTP) server. The file or files may e.g. be executable files for direct or indirect download to and execution on the apparatus(es) 1500, 1200, and/or the hardware synthesizing device(s) 1601, to e.g. configure or make them operative as described above. The file or files may also or alternatively be for intermediate download and compilation involving the same or another processor(s) to make them executable before further download and execution.

Note that any processing module(s) mentioned in the foregoing, e.g. in relation to Figure 15, may be implemented as a software and/or hardware module, e.g. in existing hardware and/or as an ASIC a FPGA, or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC). However, as already discussed above, the apparatus(es), e.g. apparatus 1500 or 1200, of embodiments herein is preferably implemented on an NSIP architecture, e.g. on a chip implementation of a NSIP type of processor, such as the LAPP1100 chip or similar. Some embodiments herein may be realized by programming, such as by installing the computer program 1503, on a programmable NSIP chip or for execution to control such chip.

Those skilled in the art will also appreciate that the modules and circuitry discussed herein may refer to a combination of hardware modules, software modules, analogue and digital circuits, and/or one or more processors configured with software and/or firmware, e.g. stored in memory, that, when executed by the one or more processors e.g. make the apparatus(es) 1500 to be configured to and/or to perform the above-described actions of embodiments herein.

Any identification by any identifier herein may be implicit or explicit. The identification may be unique in a certain context, e.g. for a certain computer program or program provider.

As used herein, the term "memory" may refer to a data memory for storing digital information, typically a hard disk, a magnetic storage, medium, a portable computer diskette or disc, flash memory, Random Access Memory (RAM) or the like. Furthermore, the memory may be an internal register memory of a processor.

Also note that any enumerating terminology such as first value, second value, first device, second device etc., should as such be considered non-limiting and the terminology as such does not imply a certain hierarchical relation. Without any explicit information in the contrary, naming by enumeration should be considered merely a way of accomplishing different names.

As used herein, the terms "number" or "value" may in general refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "configured to" may mean that a processing circuit is configured to, or adapted to, by means of software or hardware configuration, perform one or more of the actions described herein.

As used herein, the expression "may" and "in some embodiments" has typically been used to indicate that the features described may be combined with any other embodiment disclosed herein.

In the drawings, features that may be present in only some embodiments are typically drawn using dotted or dashed lines.

When using the word "comprise" or "comprising" it shall be interpreted as nonlimiting, i.e. meaning "consist at least of".

**Claims**

1. A method for providing a measure indicative of impact time between an image sensor (1201) and an object (1210) relatively moving at least partially towards, or away from, the image sensor (1201), wherein the method comprises:

   - obtaining (1401) image data comprising a first set of pixel data for pixel positions (1..N) of the image sensor (1210) and a second set of pixel data for said pixel positions (1..N), wherein the pixel data at each (i) of said pixel positions (1..N) in the first set relate to sensed pixel data by the image sensor (1201) for that pixel position (i) when imaging said object (1210) a first time (t1) and pixel data at each (i) of said pixel positions (1..N) in the second set relate to pixel data sensed by the image sensor (1201) for that pixel position (i) when subsequently imaging said object a later second time (t2),
   - identifying (1402) local extreme points, "LEPs" in the first set of pixel data,
   - identifying (1404) new LEPs in the second set of pixel data, which new LEPs are LEPs in pixel positions without identified LEPs in the first set of pixel data;
   - computing (1405) a first value proportional to the total number of said identified new LEPs in the second set of pixel data, and
   - providing (1407) said measure indicative of impact time based on said first value.

2. The method as claimed in claim 1, wherein the method further comprises:

   - computing (1403) a second value proportional to the total number of said identified LEPs in the first set of pixel data, and

   wherein said measure is based on how said first and second values relate to each other.

3. The method as claimed in claim 2, wherein the method further comprises:

   - computing (1406) a third value corresponding to a quotient between said first and second values, wherein said measure indicative of impact time is based on said third value.

4. The method as claimed in claim 3, wherein said measure indicative of impact time is further based on a coefficient (k) that corresponds to said third value multiplied with a constant value that is constant given the total number (N) of said pixel positions (1..N) and position of Focus of Expansion, "FoE", of the object in relation to said pixel positions (N).

5. The method as claimed in claim 4, wherein said measure corresponds to an estimate of said impact time, and said provision of the measure comprises computation of said estimate based on said coefficient (k) and a time difference ($T_d$) between when pixel data of the second set were sensed and when pixel data of the second set were sensed.

6. One or more computer programs (1503;1603), comprising instructions that when executed by one or more apparatuses (1200; 1500) causes these to perform the method according to any one of claims 1-5, and/or comprising instructions that when executed by a hardware synthesizing device (1601) causes hardware to be synthesized and/or be configured as said one or more apparatuses (1200; 1500) according to any one of claims 8-14.

7. One or more carriers comprising said one or more computer programs (1503; 1603) according to claim 6, wherein each of said one or more carriers is any one of electronic signal, optical signal, radio signal or computer readable storage medium (1701).

8. One or more apparatuses (1200; 1500) for providing a measure indicative of impact time between an image sensor (1201) and an object (1210) relatively moving at least partially towards, or away from, the image sensor (1201), wherein said one or more apparatuses are configured to:

obtain (1401) image data comprising a first set of pixel data for pixel positions (1..N) of the image sensor (1210) and a second set of pixel data for said pixel positions (1..N), wherein the pixel data at each (i) of said pixel positions (1..N) in the first set relate to sensed pixel data by the image sensor (1201) for that position (i) when imaging said object (1210) a first time (t1) and pixel data at each (i) of said pixel positions (1..N) in the second set relate to pixel data sensed by the image sensor (1201) for that position (i) when subsequently imaging said object a later second time (t2),

identify (1402) local extreme points, "LEPs" in the first set of pixel data,

identify (1404) new LEPs in the second set of pixel data, which new LEPs are LEPs in pixel positions without identified LEPs in the first set of pixel data;

compute (1405) a first value proportional to the total number of said identified new LEPs in the second set of pixel data, and

provide (1407) said measure indicative of impact time based on said first value.

9. The one or more apparatuses (1200; 1500) as claimed in claim 8, wherein said one or more apparatuses are further configured to:
compute (1403) a second value proportional to the total number of said identified LEPs in the first set of pixel data, and wherein said measure is based on how said first and second values relate to each other.

10. The one or more apparatuses (1200; 1500) as claimed in claim 9, wherein said one or more apparatuses are further configured to:
compute (1406) a third value corresponding to a quotient between said first and second values, wherein said measure indicative of impact time is based on said third value.

11. The one or more apparatuses as claimed in claim 10, wherein said measure indicative of impact time is further based on a coefficient (k) that corresponds to said third value multiplied with a constant value that is constant given the total number (N) of said pixel positions (1..N) and position of Focus of Expansion, "FoE", of the object in relation to said pixel positions (N).

12. The one or more apparatuses as claimed in claim 11, wherein said constant value is a predetermined value.

13. The one or more apparatuses as claimed in claim 11, wherein said constant value is obtained by computing it based on the total number of said pixel positions (N) and information on where the FOE of the object is located in relation to said pixel positions (i).

14. The one or more apparatuses as claimed in any one of claims 11-13, wherein said measure corresponds to an estimate of said impact time, and said provision of the measure comprises computation of said estimate based on said coefficient (k) and a time difference ($T_d$) between when pixel data of the second set were sensed and when pixel data of the second set were sensed.

15. The one or more apparatuses as claimed in claim 14, wherein the one or more apparatuses are configured to operate under conditions such that the movement of the object (1210) during said time difference (Td) would cause a 1-pixel feature of the object (1210) captured by the image sensor (1201) and present in both the first and second sets of pixel data, to move less than a predefined distance.

**Patentansprüche**

1. Verfahren zum Bereitstellen eines Maßes zur Anzeige der Aufprallzeit zwischen einem Bildsensor (1201) und einem Objekt (1210) angibt, das sich relativ mindestens teilweise auf den Bildsensor (1201) zu oder von ihm weg bewegt, wobei das Verfahren umfasst:

- Erhalten (1401) von Bilddaten, die einen ersten Satz von Pixeldaten für Pixelpositionen (1..N) des Bildsensors (1210) und einen zweiten Satz von Pixeldaten für die Pixelpositionen (1..N) umfassen, wobei die Pixeldaten an jeder (i) der Pixelpositionen (1..N) in dem ersten Satz sich auf vom Bildsensor (1201) erfasste Pixeldaten für diese Pixelposition (i) beziehen, wenn das Objekt (1210) zu einer ersten Zeit (t1) abgebildet wird, und Pixeldaten an jeder (i) der Pixelpositionen (1..N) in dem zweiten Satz sich auf Pixeldaten beziehen, die vom Bildsensor (1201) für diese Pixelposition (i) erfasst werden, wenn das Objekt anschließend zu einer späteren zweiten Zeit (t2) abgebildet wird,

- Identifizieren (1402) von lokalen Extrempunkten, "LEPs", im ersten Satz von Pixeldaten,
- Identifizieren (1404) neuer LEPs in dem zweiten Satz von Pixeldaten, wobei die neuen LEPs LEPs in Pixelpositionen ohne identifizierte LEPs in dem ersten Satz von Pixeldaten sind;
- Berechnen (1405) eines ersten Wertes, der proportional zu der Gesamtzahl der identifizierten neuen LEPs in dem zweiten Satz von Pixeldaten ist, und
- Bereitstellen (1407) des Maßes, das basierend auf dem ersten Wert die Aufprallzeit angibt.

2. Verfahren nach Anspruch 1, wobei das Verfahren weiter umfasst:

   - Berechnen (1403) eines zweiten Wertes, der proportional zur Gesamtzahl der identifizierten LEPs in dem ersten Satz von Pixeldaten ist, und

   wobei das Maß darauf basiert, wie sich der erste und der zweite Wert aufeinander verhalten.

3. Verfahren nach Anspruch 2, wobei das Verfahren weiter umfasst:

   - Berechnen (1406) eines dritten Wertes, der einem Quotienten zwischen dem ersten und dem zweiten Wert entspricht, wobei das Maß, das die Aufprallzeit angibt, auf dem dritten Wert basiert.

4. Verfahren nach Anspruch 3, wobei das Maß, das die Aufprallzeit angibt, weiter auf einem Koeffizienten (k) basiert, der dem dritten Wert entspricht, der mit einem konstanten Wert multipliziert ist, der konstant ist, wenn die Gesamtzahl (N) der Pixelpositionen (1..N) und die Position des Ausdehnungsschwerpunkts, "FoE", des Objekts in Bezug auf die Pixelpositionen (N) gegeben ist.

5. Verfahren nach Anspruch 4, wobei das Maß einer Schätzung der Aufprallzeit entspricht und die Bereitstellung des Maßes die Berechnung der Schätzung basierend auf dem Koeffizienten (k) und einer Zeitdifferenz ($T_d$) zwischen dem Zeitpunkt, zu dem die Pixeldaten des zweiten Satzes erfasst wurden, und dem Zeitpunkt, zu dem die Pixeldaten des zweiten Satzes erfasst wurden, umfasst.

6. Ein oder mehrere Computerprogramme (1503; 1603), die Anweisungen umfassen, die, wenn sie von einer oder mehreren Einrichtungen (1200; 1500) ausgeführt werden, diese veranlassen, das Verfahren nach einem der Ansprüche 1-5 durchzuführen, und/oder Anweisungen umfassen, die, wenn sie von einer Hardware-Synthesevorrichtung (1601) ausgeführt werden, veranlassen, dass die Hardware synthetisiert wird und/oder als die eine oder mehreren Einrichtungen (1200; 1500) nach einem der Ansprüche 8-14 konfiguriert sind.

7. Ein oder mehrere Träger, die das eine oder die mehreren Computerprogramme (1503; 1603) nach Anspruch 6 umfassen, wobei jeder der einen oder mehreren Träger ein elektronisches Signal, ein optisches Signal, ein Funksignal oder ein computerlesbares Speichermedium (1701) ist.

8. Eine oder mehrere Einrichtungen (1200; 1500) zum Bereitstellen eines Maßes, das die Aufprallzeit zwischen einem Bildsensor (1201) und einem Objekt (1210) angibt, das sich mindestens teilweise auf den Bildsensor (1201) zu oder von ihm weg bewegt, wobei die eine oder mehreren Einrichtungen konfiguriert sind zum:

   Erhalten (1401) von Bilddaten, die einen ersten Satz von Pixeldaten für Pixelpositionen (1..N) des Bildsensors (1210) und einen zweiten Satz von Pixeldaten für die Pixelpositionen (1..N) umfassen, wobei die Pixeldaten an jeder (i) der Pixelpositionen (1..N) in dem ersten Satz sich auf erfasste Pixeldaten durch den Bildsensor (1201) für diese Position (i) beziehen, wenn das Objekt (1210) zu einer ersten Zeit (t1) abgebildet wird, und Pixeldaten an jeder (i) der Pixelpositionen (1..N) in dem zweiten Satz sich auf Pixeldaten beziehen, die durch den Bildsensor (1201) für diese Position (i) erfasst werden, wenn das Objekt anschließend zu einer späteren zweiten Zeit (t2) abgebildet wird,
   Identifizieren (1402) von lokalen Extrempunkten, "LEPs", in dem ersten Satz von Pixeldaten,
   Identifizieren (1404) neuer LEPs in dem zweiten Satz von Pixeldaten, wobei die neuen LEPs LEPs in Pixelpositionen ohne identifizierte LEPs in dem ersten Satz von Pixeldaten sind;
   Berechnen (1405) eines ersten Wertes, der proportional zu der Gesamtzahl der identifizierten neuen LEPs in dem zweiten Satz von Pixeldaten ist, und
   Bereitstellen (1407) des Maßes, das basierend auf dem ersten Wert die Aufprallzeit angibt.

9. Eine oder mehrere Einrichtungen (1200; 1500) nach Anspruch 8, wobei die eine oder die mehreren Einrichtungen weiter konfiguriert sind zum:
Berechnen (1403) eines zweiten Werts, der proportional zu der Gesamtzahl der identifizierten LEPs in dem ersten Satz von Pixeldaten ist, und
wobei das Maß darauf basiert, wie sich der erste und der zweite Wert aufeinander verhalten.

10. Eine oder mehrere Einrichtungen (1200; 1500) nach Anspruch 9, wobei die eine oder die mehreren Einrichtungen weiter konfiguriert sind zum:
Berechnen (1406) eines dritten Werts, der einem Quotienten zwischen dem ersten und dem zweiten Wert entspricht, wobei das Maß, das die Aufprallzeit angibt, auf dem dritten Wert basiert.

11. Eine oder mehrere Einrichtungen nach Anspruch 10, wobei das Maß, das die Aufprallzeit angibt, weiter auf einem Koeffizienten (k) basiert, der dem dritten Wert entspricht, der mit einem konstanten Wert multipliziert ist, der konstant ist, wenn die Gesamtzahl (N) der Pixelpositionen (1..N) und die Position des Ausdehnungsschwerpunkts, "FoE", des Objekts in Bezug auf die Pixelpositionen (N) gegeben ist.

12. Eine oder mehrere Einrichtungen nach Anspruch 11, wobei der konstante Wert ein vorbestimmter Wert ist.

13. Eine oder mehrere Einrichtungen nach Anspruch 11, wobei der konstante Wert erhalten wird, indem er basierend auf der Gesamtzahl der Pixelpositionen (N) und Informationen darüber, wo der FOE des Objekts in Bezug auf die Pixelpositionen (i) lokalisiert ist, berechnet wird.

14. Eine oder mehrere Einrichtungen nach einem der Ansprüche 11-13, wobei das Maß einer Schätzung der Aufprallzeit entspricht und die Bereitstellung des Maßes die Berechnung der Schätzung basierend auf dem Koeffizienten (k) und einer Zeitdifferenz ($T_d$) zwischen dem Zeitpunkt, zu dem die Pixeldaten des zweiten Satzes erfasst wurden, und dem Zeitpunkt, zu dem die Pixeldaten des zweiten Satzes erfasst wurden, umfasst.

15. Eine oder mehrere Einrichtungen nach Anspruch 14, wobei die eine oder mehreren Einrichtungen konfiguriert sind, um unter solchen Bedingungen zu arbeiten, dass die Bewegung des Objekts (1210) während der Zeitdifferenz (Td) veranlassen würde, dass sich ein 1-Pixel-Merkmal des Objekts (1210), das vom Bildsensor (1201) erfasst wurde und sowohl im ersten als auch im zweiten Satz von Pixeldaten vorhanden ist, um weniger als einen vordefinierten Abstand bewegen würde.

**Revendications**

1. Procédé de fourniture d'une mesure indiquant le temps d'impact entre un capteur d'image (1201) et un objet (1210) se déplaçant relativement au moins partiellement vers le capteur d'image (1201), ou s'éloignant de celui-ci, dans lequel le procédé comprend :

   - l'obtention (1401) de données d'image comprenant un premier ensemble de données de pixel pour des positions de pixel (1..N) du capteur d'image (1210) et un deuxième ensemble de données de pixel pour lesdites positions de pixel (1..N),
   dans lequel les données de pixel au niveau de chacune (i) desdites positions de pixel (1..N) dans le premier ensemble sont liées à des données de pixel détectées par le capteur d'image (1201) pour cette position de pixel (i) lors de la capture dudit objet (1210) à un premier instant (t1) et les données de pixel au niveau de chacune (i) desdites positions de pixel (1..N) dans le deuxième ensemble sont liées à des données de pixel détectées par le capteur d'image (1201) pour cette position de pixel (i) lors de la capture ultérieure dudit objet un second instant (t2) ultérieur,
   - l'identification (1402) de points extrêmes locaux, « PEL » dans le premier ensemble de données de pixel,
   - l'identification (1404) de nouveaux PEL dans le deuxième ensemble de données de pixel, lesquels nouveaux PEL sont des PEL dans des positions de pixel sans PEL identifiés dans le premier ensemble de données de pixel ;
   - le calcul (1405) d'une première valeur proportionnelle au nombre total desdits nouveaux PEL identifiés dans le deuxième ensemble de données de pixel, et
   - la fourniture (1407) de ladite mesure indiquant le temps d'impact sur la base de ladite première valeur.

2. Procédé selon la revendication 1, dans lequel le procédé comprend en outre :

   - le calcul (1403) d'une deuxième valeur proportionnelle au nombre total desdits PEL identifiés dans le premier ensemble de données de pixel, et

dans lequel ladite mesure est basée sur la manière dont lesdites première et deuxième valeurs sont liées l'une à l'autre.

3.  Procédé selon la revendication 2, dans lequel le procédé comprend en outre :

- le calcul (1406) d'une troisième valeur correspondant à un quotient entre lesdites première et deuxième valeurs, dans lequel ladite mesure indiquant le temps d'impact est basée sur ladite troisième valeur.

4.  Procédé selon la revendication 3, dans lequel ladite mesure indiquant le temps d'impact est en outre basée sur un coefficient (k) qui correspond à ladite troisième valeur multipliée par une valeur constante qui est constante étant donné le nombre total (N) desdites positions de pixel (1..N) et la position du foyer d'expansion, « FdE », de l'objet par rapport auxdites positions de pixel (N).

5.  Procédé selon la revendication 4, dans lequel ladite mesure correspond à une estimation dudit temps d'impact, et ladite fourniture de la mesure comprend le calcul de ladite estimation sur la base dudit coefficient (k) et d'une différence de temps ($T_d$) entre le moment où des données de pixel du deuxième ensemble ont été détectées et le moment où des données de pixel du deuxième ensemble ont été détectées.

6.  Un ou plusieurs programmes informatiques (1503 ; 1603), comprenant des instructions qui lorsqu'elles sont mises en œuvre par un ou plusieurs appareils (1200 ; 1500) amènent ceux-ci à mettre en œuvre le procédé selon l'une quelconque des revendications 1 à 5, et/ou comprenant des instructions qui lorsqu'elles sont mises en œuvre par un dispositif (1601) de synthèse de matériel amènent un matériel à être synthétisé et/ou à être configuré en tant que dits un ou plusieurs appareils (1200 ; 1500) selon l'une quelconque des revendications 8 à 14.

7.  Un ou plusieurs supports comprenant lesdits un ou plusieurs programmes informatiques (1503 ; 1603) selon la revendication 6, dans lequel chacun desdits un ou plusieurs supports est l'un quelconque d'un signal électronique, d'un signal optique, d'un signal radio ou d'un support de stockage lisible par ordinateur (1701).

8.  Un ou plusieurs appareils (1200 ; 1500) pour fournir une mesure indiquant le temps d'impact entre un capteur d'image (1201) et un objet (1210) se déplaçant relativement au moins partiellement vers le capteur d'image (1201), ou s'éloignant de celui-ci, dans lequel lesdits un ou plusieurs appareils sont configurés pour :

obtenir (1401) des données d'image comprenant un premier ensemble de données de pixel pour des positions de pixel (1..N) du capteur d'image (1210) et un deuxième ensemble de données de pixel pour lesdites positions de pixel (1..N), dans lequel les données de pixel au niveau de chacune (i) desdites positions de pixel (1..N) dans le premier ensemble sont liées à des données de pixel détectées par le capteur d'image (1201) pour cette position (i) lors de la capture dudit objet (1210) un premier instant (t1) et les données de pixel au niveau de chacune (i) desdites positions de pixel (1..N) dans le deuxième ensemble sont liées à des données de pixel détectées par le capteur d'image (1201) pour cette position (i) lors de la capture ultérieure dudit objet un second instant (t2) ultérieur,
identifier (1402) des points extrêmes locaux, « PEL » dans le premier ensemble de données de pixel,
identifier (1404) des nouveaux PEL dans le deuxième ensemble de données de pixel, lesquels nouveaux PEL sont des PEL dans des positions de pixel sans PEL identifiés dans le premier ensemble de données de pixel ;
calculer (1405) une première valeur proportionnelle au nombre total desdits nouveaux PEL identifiés dans le deuxième ensemble de données de pixel, et
fournir (1407) ladite mesure indiquant le temps d'impact sur la base de ladite première valeur.

9.  Un ou plusieurs appareils (1200 ; 1500) selon la revendication 8, dans lesquels lesdits un ou plusieurs appareils sont en outre configurés pour :
calculer (1403) une deuxième valeur proportionnelle au nombre total desdits PEL identifiés dans le premier ensemble de données de pixel, et
dans lesquels ladite mesure est basée sur la manière dont lesdites première et deuxième valeurs sont liées l'une à l'autre.

10. Un ou plusieurs appareils (1200 ; 1500) selon la revendication 9, dans lesquels lesdits un ou plusieurs appareils sont en outre configurés pour :

calculer (1406) une troisième valeur correspondant à un quotient entre lesdites première et deuxième valeurs, dans lesquels ladite mesure indiquant le temps d'impact est basée sur ladite troisième valeur.

11. Un ou plusieurs appareils selon la revendication 10, dans lesquels ladite mesure indiquant le temps d'impact est en outre basée sur un coefficient (k) qui correspond à ladite troisième valeur multipliée par une valeur constante qui est constante étant donné le nombre total (N) desdites positions de pixel (1..N) et la position du foyer d'expansion, « FdE », de l'objet par rapport auxdites positions de pixel (N).

12. Un ou plusieurs appareils selon la revendication 11, dans lesquels ladite valeur constante est une valeur prédéterminée.

13. Un ou plusieurs appareils selon la revendication 11, dans lesquels ladite valeur constante est obtenue en la calculant sur la base du nombre total desdites positions de pixel (N) et d'informations sur l'endroit où le FdE de l'objet se situe par rapport auxdites positions de pixel (i).

14. Un ou plusieurs appareils selon l'une quelconque des revendications 11 à 13, dans lesquels ladite mesure correspond à une estimation dudit temps d'impact, et ladite fourniture de la mesure comprend le calcul de ladite estimation sur la base dudit coefficient (k) et d'une différence de temps ($T_d$) entre le moment où des données de pixel du deuxième ensemble ont été détectées et le moment où des données de pixel du deuxième ensemble ont été détectées.

15. Un ou plusieurs appareils selon la revendication 14, dans lesquels les un ou plusieurs appareils sont configurés pour fonctionner dans des conditions telles que le mouvement de l'objet (1210) pendant ladite différence de temps (Td) amènerait une caractéristique de 1 pixel de l'objet (1210) capturée par le capteur d'image (1201) et présente à la fois dans le premier et le deuxième ensemble de données de pixel, à se déplacer de moins d'une distance prédéfinie.

FIG. 1

FIG. 2

FIG. 3

FIG. 4

FIG. 5

FIG. 6

FIG. 7A

FIG. 7B

FIG. 8

FIG. 9

FIG. 10

FIG. 11

**FIG. 12**

**FIG. 13A**

**FIG. 13B**

```
         ┌─────────┐
         │  Start  │
         └─────────┘
              │
┌────────────────────────────────┐
│ 1401 Obtain first set and second│
│       set of pixel data         │
└────────────────────────────────┘
              │
┌────────────────────────────────┐
│ 1402 Identify LEPs in first set │
│         of pixel data           │
└────────────────────────────────┘
              │
┌ ─ ─ ─ ─ ─ ─ ─ ─ ─ ─ ─ ─ ─ ─ ─ ┐
  1403 Compute second value
│ proportional to total number of │
  identified LEPs in the first set
└ ─ ─ ─ ─ ─ ─ ─ ─ ─ ─ ─ ─ ─ ─ ─ ┘
              │
┌────────────────────────────────┐
│ 1404 Identify new LEPs in second│
│       set of pixel data         │
└────────────────────────────────┘
              │
┌────────────────────────────────┐
│      1405 Compute first value   │
│    proportional to total number │
│  of identified new LEPs in the  │
│           second set            │
└────────────────────────────────┘
              │
┌ ─ ─ ─ ─ ─ ─ ─ ─ ─ ─ ─ ─ ─ ─ ─ ┐
     1406 Compute third value
│ corresponding to quotient between│
    the first and second values
└ ─ ─ ─ ─ ─ ─ ─ ─ ─ ─ ─ ─ ─ ─ ─ ┘
              │
┌────────────────────────────────┐
│ 1407 Provide measure indicative │
│  of impact time based on at least│
│         the first value         │
└────────────────────────────────┘
              │
              ▼
         ┌─────────┐
         │   End   │
         └─────────┘
```

# FIG. 14

Apparatus(es) 1500

Processing module(s) 1501

Memory 1502

1503

I/O module(s) 1505

Processor(s) 1504

FIG. 15

1601

1603

1200; 1500

FIG. 16

1701

1503; 1603

1702

1200; 1500

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013107525 A1

**Non-patent literature cited in the description**

- **FORCHHEIMER R** ; **ASTRÖM A**. Near-Sensor Image Processing. A New paradigm. *IEEE Trans Image Processing*, 1994, vol. 3 (6), 735-746